(19) Europäisches Patentamt
European Patent Office
Office européen des brevets

(11) **EP 3 163 129 B1**

(12) **EUROPEAN PATENT SPECIFICATION**

(45) Date of publication and mention
of the grant of the patent:
**14.10.2020 Bulletin 2020/42**

(21) Application number: **15811150.0**

(22) Date of filing: **25.06.2015**

(51) Int Cl.:
***F16J 9/20*** *(2006.01)*     ***F02F 5/00*** *(2006.01)*

(86) International application number:
**PCT/JP2015/068368**

(87) International publication number:
**WO 2015/199183 (30.12.2015 Gazette 2015/52)**

(54) **PISTON RING**

KOLBENRING

SEGMENT DE PISTON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2014   JP 2014132184
27.06.2014   JP 2014132185**

(43) Date of publication of application:
**03.05.2017   Bulletin 2017/18**

(73) Proprietor: **Kabushiki Kaisha Riken
Chiyoda-ku, Tokyo 102-8202 (JP)**

(72) Inventors:
• **KAWANISHI, Minoru
Kashiwazaki-shi
Niigata 945-8555 (JP)**

• **KAKEGAWA, Satoru
Kashiwazaki-shi
Niigata 945-8555 (JP)**
• **SHIMIZU, Hiroshi
Kashiwazaki-shi
Niigata 945-8555 (JP)**

(74) Representative: **SSM Sandmair
Patentanwälte Rechtsanwalt
Partnerschaft mbB
Joseph-Wild-Straße 20
81829 München (DE)**

(56) References cited:
**DE-A1- 4 429 649       JP-A- H06 185 620
JP-A- 2002 039 384     JP-A- 2005 273 583
US-A1- 2013 181 411**

**Description**

FIELD OF THE INVENTION

The present invention relates to a piston ring, particularly to a compression ring having a barrel-faced outer peripheral sliding surface.

BACKGROUND OF THE INVENTION

As global environmental problems are getting severer, large diesel engines including those for vessels recently tend to have increasingly higher power and efficiency ($CO_2$ reduction), such as higher effective cylinder pressure and maximum pressure, higher operation stress by an increased thermal load, and a higher average piston speed, etc. Particularly, the maximum cylinder pressure has reached 22 MPa, and is planned to increase to 30 MPa in the future. Because a load of pressing a first compression ring, which may be called "top ring" to a cylinder liner surface, which may be called "ring load" increases almost proportionally to the maximum cylinder pressure, the use environment of the compression ring is getting extremely severer.

In the above severe use environment, the ring groove of a piston tends to be deformed slightly downwards (opposite to the combustion chamber) from a direction perpendicular to the axial direction, by thermal deformation by the thermal expansion of an upper portion of the piston, combustion pressure, and the wearing of the piston groove; and the top ring tends to be inclined downwards (opposite to the combustion chamber) by pressure in the cylinder. Namely, the top ring tends to come into sliding contact with a cylinder wall on the combustion chamber side from the axial centre of the outer peripheral sliding surface. In an extreme case, the top ring may come into contact with the cylinder wall outside the outer peripheral sliding surface, which phenomenon is called "edge loading" or "contact above outer periphery".

Troubles in large diesel engines are concentrated in pistons including piston rings, and cylinder liners, and particularly scuffing between the piston rings and the cylinder liners are likely to cause serious damage. The scuffing likely takes place with increased ring load and edge loading as described above, or when boundary lubrication occurs near a top dead centre or a bottom dead centre.

Conventional top rings for large diesel engines are provided with hard coatings by plating or flame spraying on their outer peripheral sliding surfaces, and ground to have barrel-faced surfaces for improved durability and oil-film-forming function.

For example, Japanese Utility Model 57-196238 A discloses a piston ring comprising an outer peripheral sliding surface having a cross-section shape constituted by arcs having first, second and third different radii of curvature from above; the second radius of curvature being larger than the first and third radii of curvature; a second outer peripheral sliding surface having the second radius of curvature having an axial width, which is substantially 1/2 of the axial width of the piston ring; a curvature centre of the cross-section arc constituting the second outer peripheral sliding surface being positioned within the axial width and below the width centre of the piston ring; and the first, second and third outer peripheral sliding surfaces being connected without dents in their boundaries.

JP 2002-39384 A discloses a piston ring comprising a barrel-faced outer peripheral sliding surface having chamfered corner portions connected to its upper and lower surfaces; each corner portion being in a curved shape having a radius of 0.05 mm or more and less than a radius of the barrel-faced surface; and each corner portion being continuously connected to the barrel-faced surface without a ridge; whereby a surface treatment layer such as a nitride layer or a PVD layer formed on the outer peripheral sliding surface is free from cracking and peeling in edge portions in boundaries of the barrel-faced surface and the corner portions.

JP 2009-91927 A discloses a piston ring comprising an outer peripheral surface having an arcuate profile having a radius R of curvature of 1.18D - 1.35D, wherein D is an inner diameter of a cylinder, for preventing increase in the amount of a blow-by gas due to insufficient gas sealing between the outer peripheral surface of the piston ring and a sliding surface of a cylinder liner; thereby preventing the staining of a back portion of the piston ring and the corrosion of the cylinder liner by a sulphurous acid gas in a blow-by gas, with reduced contact pressure. This piston ring is characterised by having a large radius R of curvature, in view of the fact that a leak flow rate Q expressing the gas sealing is inversely proportional to the cube of the radius R of curvature of the arcuate profile.

Though the piston rings of Japanese Utility Model 57-196238 A, JP 2002-39384 A and JP 2009-91927 A comprise barrel outer peripheral surfaces and corner portions connected with smooth curves, or barrel-faced surfaces having uniformly larger radii of curvature than conventional ones, they are not sufficient, because the behaviours of pistons and piston rings are not considered to prevent scuffing and edge loading.

US 2013/181411 A1 discloses a piston ring comprising an outer peripheral sliding surface having a first curved surface which is outwardly bulging in a cross-section along a centre axis of said piston ring, the first curved surface having a radius of curvature continuously increasing or decreasing from the crankcase side to the combustion chamber side.

OBJECT OF THE INVENTION

An object of the present invention is to provide a piston ring having excellent scuffing resistance and wear resistance, and a piston ring capable of avoiding edge loading, even in a severe use environment under increased pressure and thermal load.

SUMMARY OF THE INVENTION

As a result of intensive research on the shape of an outer peripheral sliding surface of a piston ring, the inventors have provided a piston ring having such a shape as to decrease Hertz stress of the contact surface of the ring, and capable of forming a sufficient oil film while avoiding edge loading, thereby having excellent scuffing resistance and wear resistance.

Thus, the piston ring of the present invention comprises an outer peripheral sliding surface having a first curved surface which is outwardly bulging in a cross-section along a centre axis of the piston ring, the first curved surface having a radius of curvature continuously increasing or continuously decreasing as going from a lower-surface side to an upper-surface side, wherein a curve of the first curved surface in said cross-section is a deformed involute curve expressed by the formulae:

$$x = a \, (\cos \theta + \theta^b \cdot \sin \theta) \, / \, \alpha,$$

and

$$y = a \, (\sin \theta - \theta \cos \theta \,) \, / \, \beta,$$

where a, b, $\alpha$ and $\beta$ are constants.

The peak of the first curved surface in the above cross-section is preferably positioned on the crank case side with respect to the axial centre.

The outer peripheral sliding surface preferably has chamfers or second and third outwardly curved surfaces between the first curved surface and the upper surface on the combustion chamber side, and between the first curved surface and the lower surface on the crank case side.

The radial receding distance t from the peak of the first curved surface to the end of the first curved surface on the combustion chamber side in the above cross-section, which is called simply "radial receding distance" or "receding distance of the outer peripheral sliding surface on the combustion chamber side" is preferably 0.001-0.015% of the nominal diameter d1 of the piston ring.

EFFECTS OF THE INVENTION

The first piston ring of the present invention comprises an outer peripheral sliding surface having a first curved surface having a radius of curvature continuously increasing from the crank case side to the combustion chamber side, thereby having a large radius of curvature on the combustion chamber side. As a result, it undergoes small Hertz contact stress under the ring load on the combustion chamber side, while it is in sliding contact with a cylinder wall under the maximum cylinder pressure applied, thereby avoiding scuffing and serious damage. Because a large radius of curvature on the combustion chamber side enables a thick oil film to be formed, an oil remains up to near a top dead centre, contributing to avoiding scuffing.

The second piston ring of the present invention comprises an outer peripheral sliding surface shape having a first curved surface having a radius of curvature continuously decreasing from the crank case side to the combustion chamber side, thereby having a relatively small radius of curvature on the combustion chamber side, and a large radial receding distance. As a result, it can avoid edge loading during a combustion process in which the maximum cylinder pressure is applied, thereby avoiding serious damage. Also, when the piston ring has a large radial receding distance on the combustion chamber side, an oil flowing from a piston skirt while the piston is moving downwards tends to be accumulated, so that the accumulated oil remains up to near the top dead centre, contributing to avoiding scuffing. Because of a large radius of curvature on the crank case side, Hertz stress under the ring load is reduced, and a thick oil film is formed, resulting in excellent wear resistance.

With the first curved surface expressed by a deformed involute curve, the first and second piston rings can have radius of curvatures continuously changing in a desired range. Further, the first curved surface having a radius of curvature continuously increasing or continuously decreasing as going from the crank case side to the combustion chamber side can be surely and efficiently formed by numerically controlled machining, or by grinding with a grinder shaped by numerical control.

BRIEF DESCRIPTION OF THE DRAWINGS

Fig. 1 is a cross-sectional view showing a piston ring according to an embodiment of the present invention, in which an outer peripheral sliding surface is formed by a first curved surface.

Fig. 2 is a cross-sectional view showing a piston ring according to another embodiment of the present invention, in which a peak of an outer peripheral sliding surface is positioned at an end on the lower-surface side.

Fig. 3 is a cross-sectional view showing a piston ring according to a further embodiment of the present invention, which comprises chamfers between a first curved surface and an upper surface on the combustion chamber side, and between the first curved surface and a lower surface on the crank case side.

Fig. 4 is a cross-sectional view showing a piston ring according to a still further embodiment of the present invention, which comprises second and third outwardly curved surfaces between a first curved surface and an upper surface on the combustion chamber side, and between the first curved surface and a lower surface on the crank case side.

DESCRIPTION OF THE PREFERRED EMBODIMENTS

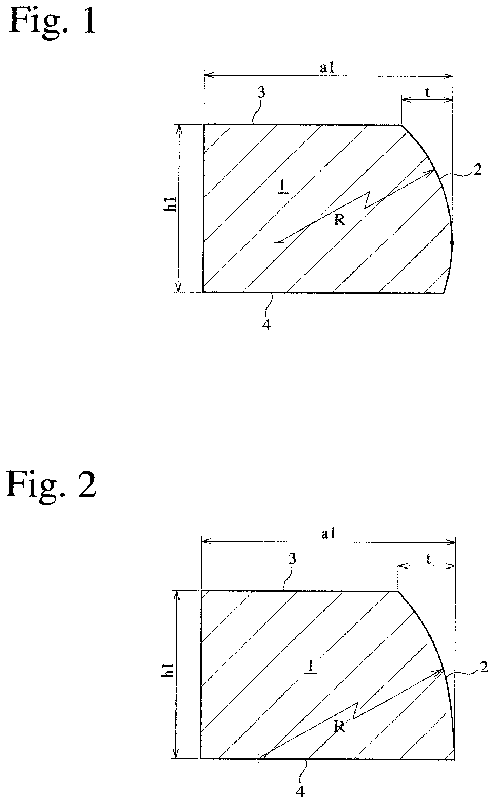

Figs. 1-4 show the cross-sections of piston rings 1 each having an axial width h1 and a radial thickness a1 according to embodiments of the present invention. Each cross-section is along the centre axis of a piston ring 1, whose outer peripheral sliding surface has a first outwardly curved surface 2. This first curved surface 2 has a radius R of curvature continuously increasing (the first piston ring of the present invention) or continuously decreasing (the second piston ring of the present invention) as going from the crank case side (lower side in the figure) to the combustion chamber side (upper side in the figure). Thus, in the first piston ring of the present invention, the first curved surface 2 has a large radius of curvature on the combustion chamber side, on which the first curved surface 2 comes into sliding contact with a cylinder wall with a reduced Hertzian contact stress under the ring load, resulting in a low PV value (product of a surface pressure P and a piston speed V), thereby avoiding scuffing. In the second piston ring of the present invention, the first curved surface 2 has a small radius of curvature on the combustion chamber side, resulting in a large radial receding distance t, thereby avoiding edge loading during a combustion process in which the highest cylinder pressure is applied.

A curve having a continuously increasing radius R of curvature is, for example, an involute curve, which is a locus of a free end of a string, when the string wound around a circle is tensely unwound from the circle. The involute curve is expressed by

$$x = \cos\theta + \theta\sin\theta,$$

and

$$y = \sin\theta - \theta\cos\theta.$$

To have a curvature change suitable for the first curved surface 2 in the outer peripheral sliding surface of the piston ring of the present invention, a curve (deformed involute curve) is used expressed by the formulae obtained by deforming the above curve by parameters of a, b, $\alpha$ and $\beta$ as follows:

$$x = a\,(\cos\theta + \theta^b \cdot \sin\theta) / \alpha,$$

and

$$y = a \, (\sin \theta - \theta \cos \theta) / \beta,$$

where a, b, $\alpha$ and $\beta$ are constants.

Though a, b, $\alpha$ and $\beta$ may be properly set depending on the piston ring, a is preferably 3000-10000, b is preferably 2-3, $\alpha$ is preferably 1-2, and $\beta$ is preferably 1-5. With the axes of co-ordinates for the above formulae rotated, translated or reversed in desired amounts, for example, with the x-axis in an a1 direction (perpendicular to the ring axis) and the y-axis in an h1 direction (along the ring axis), a curve having a continuously increasing or continuously decreasing radius of curvature can be depicted with the peak of the first curved surface 2 as an origin.

When the first curved surface is clearly expressed by the above formulae, it can be easily formed with high quality, because such a curve enables machining by numerical control and grinding with a grinder shaped by numerical control.

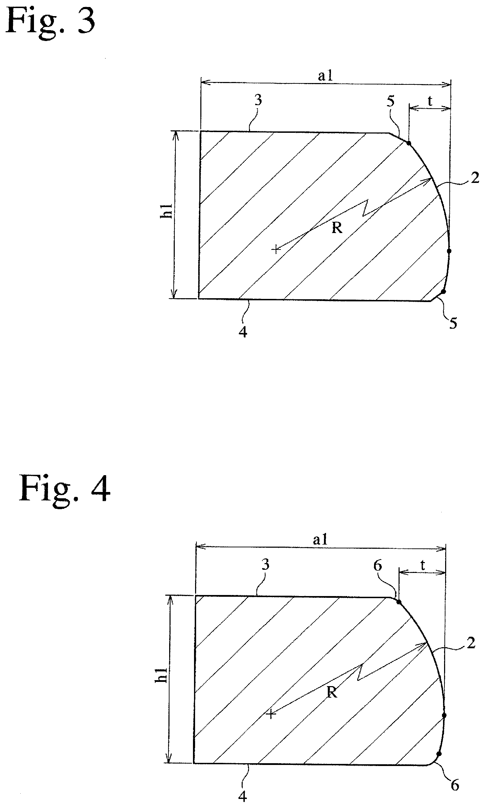

Figs. 2-4 show piston rings according to different embodiments of the present invention from that of Fig. 1. Each of the outer peripheral sliding surfaces in Figs. 1 and 2 is constituted only by the first curved surface, whose peak is positioned between an upper surface and a lower surface in Fig. 1, and at an end on the lower-surface side in Fig. 2. The outer peripheral sliding surface in Fig. 3 has chamfers 5, 5 between the first curved surface 2 and the upper surface 3 on the combustion chamber side, and between the first curved surface 2 and the lower surface 4 on the crank case side. The outer peripheral sliding surface in Fig. 4 has second and third outwardly curved surfaces 6, 6 in place of the chamfers 5, 5.

In the piston ring of the present invention, it is preferable that the peak of the first curved surface is basically positioned on the crank case side with respect to the axial centre. The receding distance t of the outer peripheral sliding surface on the combustion chamber side is preferably 0.001-0.015% of the nominal diameter d1 of the piston ring. The receding distance t in the first piston ring is preferably 0.004% or more. The receding distance t in the second piston ring is preferably 0.01% or less, more preferably 0.007% or less.

Though the piston ring of the present invention is preferably used in a large diesel engine having a nominal diameter of 200 mm or more and less than 1100 mm and a large maximum cylinder pressure, it can be used in any engine as long as it has an outer peripheral sliding surface with a desired shape, and may be used in a medium-sized diesel engine having a nominal diameter of less than 200 mm.

Though the base material of the piston ring of the present invention may be cast iron or steel, it is preferably steel to effectively achieve high power and efficiency, as well as weight reduction and low tension. When the base material is steel, the steel is preferably selected from carbon steel, low-alloy steel, spring steel, bearing steel, and martensitic stainless steel. The carbon steel is preferably high-carbon steel containing about 0.6-0.8% by mass of C. The spring steel is preferably SUP9, SUP10, SUP12, etc. The bearing steel is preferably SUJ2. The martensitic stainless steel is preferably SUS420J2 or SUS440B. Steel having necessary properties such as high-temperature strength, thermal conductivity, thermal sagging resistance, etc., is suitable.

The piston ring of the present invention preferably has one or more films or coatings selected from the group consisting of a nitride film, plating, a thermally sprayed coating, a chemical conversion coating, and an ion-plated film. The plating includes hard chromium plating, multi-layer chromium plating, composite nickel plating. The thermally sprayed coating includes a thermally sprayed molybdenum coating and a thermally sprayed cermet coating. The ion-plated film includes a CrN film and a TiN film.

Example 1 (First piston ring)

A steel rod of 110 mm in outer diameter and 200 mm in length, which had a composition comprising by mass 0.48% of C, 0.21% of Si, 0.79% of Mn, 1.02% of Cr, and 0.22% of V, was formed into a pipe by ring rolling, and machined to produce steel-made top rings each having a rectangular cross-section having a nominal diameter d1 of 330 mm, a width h1 of 5 mm, and a thickness a1 of 9 mm. A nitride layer of about 70 $\mu$m was formed on an entire surface of each top ring by gas nitriding at 460°C for 5 hours, and cermet particles, which were composite material particles mainly comprising fine Cr carbide particles dispersed in a Ni alloy matrix (SM5241 powder available from Sulzer Metco), was then thermally sprayed to a thickness of about 500 $\mu$m on the outer peripheral surface of each top ring by high-velocity flame spraying. The top ring was finally finish-ground to such depth that the thermally sprayed coating had a thickness of about 350 $\mu$m. A compound layer (white layer) formed on the surface by gas nitriding was removed by machining.

The finish-ground first curved surface of the outer peripheral sliding surface was depicted by properly rotating the axes of co-ordinates of a deformed involute curve expressed by

$$x = a \, (\cos \theta + \theta^b \cdot \sin \theta) / \alpha,$$

and

$$y = a\,(\sin\theta - \theta\cos\theta)\,/\,\beta,$$

where a = 7000, b = 3, $\alpha$ = 1, and $\beta$ = 2,
with the peak of the first curved surface (distant from the upper surface on the combustion chamber side by 3.5 mm) as an origin, and translating it. In this case, the radius of curvature was 70 mm at a position of 0.5 mm from the lower surface, 300 mm at the peak, and 460 mm at a position of 0.5 mm from the upper surface. The first curved surface was formed by a grinder having this shape, and finish grinding was completed by forming chamfers in regions of 0.5 mm from the upper and lower surfaces. The receding distance t of the outer peripheral sliding surface on the combustion chamber side was 0.009 mm, 0.002% of the nominal diameter d1.

Actual engine test

The actual engine test was conducted by using pistons having the top rings of Example 1 in all cylinders in a 6-cylinder, 4-stroke, medium-speed test diesel engine having a bore diameter of 330 mm. Except for the top rings, conventional piston rings were used. No troubles such as scuffing, etc. occurred during operation for 300 hours. No damage was observed on the sliding surfaces of the top rings taken out of the engine.

Example 2 (Second piston ring)

Steel-made top rings were produced in the same manner as in Example 1, except that the parameters of the deformed involute curve were changed to a = 6000, b = 3, $\alpha$ = 1, and $\beta$ = 1.5, and that the first curved surface was reversed such that its radius of curvature decreased from the crank case side to the combustion chamber side. In this case, the radius of curvature was 340 mm at a position of 0.5 mm from the lower surface, 270 mm at the peak, and 100 mm at a position of 0.5 mm from the upper surface. The receding distance t of the outer peripheral sliding surface on the combustion chamber side was 0.016 mm, 0.0048% of the nominal diameter d1. The same actual engine test as in Example 1 revealed that no troubles occurred in any cylinders, with no damage observed on the sliding surfaces of the top rings.

Examples 3-5 (First piston ring)

The steel-made top rings of Examples 3-5 were produced in the same manner as in Example 1, except for changing the parameters a, b, $\alpha$ and $\beta$ of the deformed involute curve as shown in Table 1. The radii of curvature and the receding distances t on the lower-surface side (0.5 mm from the lower surface), at the peak, and on the upper-surface side (0.5 mm from the upper surface) in Examples 3-5 are shown in Table 1 together with those of Examples 1 and 2. The same actual engine test as in Example 1 was conducted with the top rings of Examples 3-5 attached to two cylinders. As a result, no troubles occurred in cylinders using any top rings, and no damage was observed on the sliding surfaces of the top rings.

Table 1

| No. | Parameter | | | | Receding Distance* | | Radius of Curvature (mm) | | |
|---|---|---|---|---|---|---|---|---|---|
| | a | b | $\alpha$ | $\beta$ | T (mm) | t/d1 (%) | On Lower -Surface Side | At Peak | On Upper -Surface Side |
| Example 1 | 7000 | 3 | 1 | 2 | 0.009 | 0.0027 | 70 | 300 | 460 |
| Example 2 | 6000 | 3 | 1 | 1.5 | 0.016 | 0.0048 | 340 | 270 | 100 |
| Example 3 | 6000 | 3 | 1 | 2 | 0.010 | 0.0030 | 110 | 300 | 440 |
| Example 4 | 8000 | 3 | 1 | 1.7 | 0.007 | 0.0021 | 250 | 350 | 500 |
| Example 5 | 5000 | 3 | 1 | 1.8 | 0.010 | 0.0030 | 120 | 250 | 370 |
| *: The receding distance means a receding distance t of the outer peripheral sliding surface on the combustion chamber side. | | | | | | | | | |

Example 6 (First piston ring)

A cast iron having a composition comprising by mass 3.7% of C, 2.7% of Si, 0.6% of Mn, 0.04% of P, 0.01% of S, 0.10% of Cr, 0.90% of Ni, 0.07% of V, and 2.39% of Cu was melted, cast, and machined to produce top rings of CV graphite cast iron each having a rectangular cross-section having a nominal diameter d1 of 330 mm, a width h1 of 7 mm, and a thickness a1 of 10 mm. The first curved surface was obtained by properly rotating the axes of co-ordinates of a deformed involute curve whose parameters were a = 6000, b = 3, $\alpha$ = 1, and $\beta$ = 1.7, with the peak of the first curved surface, 4.5 mm from the upper surface on the combustion chamber side, as an origin, and translating it. In this case, the radius of curvature was 65 mm at a position of 0.5 mm from the lower surface, 280 mm at the peak, and 450 mm at a position of 0.5 mm from the upper surface. The first curved surface was formed by a grinder having this shape, and finish grinding was completed by forming chamfers in regions 0.5 mm from the upper and lower surfaces. The receding distance t of the outer peripheral sliding surface on the combustion chamber side was 0.024 mm, 0.007% of the nominal diameter d1.

Example 7 (Second piston ring)

Top rings of CV graphite cast iron were produced in the same manner as in Example 6, except that the parameters of the deformed involute curve were changed to a = 3000, b = 3, $\alpha$ = 1, and $\beta$ = 2, and that the first curved surface was reversed such that its radius of curvature decreased as going from the crank case side to the combustion chamber side. In this case, the radius of curvature was 360 mm at a position of 0.5 mm from the lower surface, 300 mm at the peak, and 50 mm at a position of 0.5 mm from the upper surface. The receding distance t of the outer peripheral sliding surface on the combustion chamber side was 0.035 mm, 0.011% of the nominal diameter d1.

The same actual engine test as in Example 1 was conducted with the top rings of Examples 6 and 7 attached to three cylinders. As a result, no troubles occurred in any cylinders, and no damage was observed on the sliding surfaces of the top rings.

**Claims**

1.   A piston ring (1) comprising an outer peripheral sliding surface having a first curved surface (2) which is outwardly bulging in a cross-section along a centre axis of said piston ring (1), said first curved surface (2) having a radius of curvature (R) continuously increasing or continuously decreasing as going from a lower-surface (4) side to an upper-surface (3) side,
    **characterised in that**
    a curve of said first curved surface in said cross-section is a deformed involute curve expressed by the formulae

$$x = a \, (\cos \theta + \theta^b \cdot \sin \theta) \, / \, \alpha,$$

and

$$y = a \, (\sin \theta - \theta \cos \theta) \, / \, \beta,$$

where a, b, $\alpha$ and $\beta$ are constants.

2.   The piston ring (1) according to Claim 1, wherein the peak of said first curved surface (2) in said cross-section is positioned on the lower-surface (4) side with respect to the axial centre.

3.   The piston ring (1) according to Claim 1 or Claim 2, wherein said piston ring (1) comprises chamfers (6) between said first curved surface (2) and said upper surface (3), and between said first curved surface (2) and said lower surface (4).

4.   The piston ring (1) according to any one of Claims 1 to 3, wherein said piston ring (1) comprises second and third outwardly curved surfaces (6) between said first curved surface (2) and said upper surface (3), and between said first curved surface (2) and said lower surface (4).

5. The piston ring (1) according to any one of Claims 1 to 4, wherein a radial receding distance t from the peak of said first curved surface (2) to the end of said first curved surface (2) on the upper-surface (3) side in said cross-section is 0.001-0.015% of the nominal diameter d1 of said piston ring (1).

**Patentansprüche**

1. Kolbenring (1), umfassend eine äußere periphere Gleitfläche mit einer ersten gekrümmten Fläche (2), welche sich nach außen wölbt in einem Querschnitt entlang einer Mittelachse des Kolbenrings (1), wobei die erste gekrümmte Fläche (2) einen Krümmungsradius (R) aufweist, der kontinuierlich zunimmt oder kontinuierlich abnimmt, wenn sie von einer untere Fläche (4)-Seite zu einer obere Fläche (3)-Seite verläuft,
   **dadurch gekennzeichnet, dass**
   eine Kurve der ersten gekrümmten Fläche in dem Querschnitt eine deformierte Evolventenkurve ist, ausgedrückt durch die Formeln

$$x = a \left( \cos \theta + \theta^b \cdot \sin \theta \right) / \alpha,$$

und

$$y = a \left( \sin \theta - \theta \cos \theta \right) / \beta,$$

wobei a, b, $\alpha$ und $\beta$ Konstanten sind.

2. Kolbenring (1) gemäß Anspruch 1, wobei der Maximalpunkt der ersten gekrümmten Fläche (2) in dem Querschnitt auf der untere Fläche (4)-Seite in Bezug auf die axiale Mitte positioniert ist.

3. Kolbenring (1) gemäß Anspruch 1 oder Anspruch 2, wobei der Kolbenring (1) Abschrägungen (6) zwischen der ersten gekrümmten Fläche (2) und der oberen Fläche (3) und zwischen der ersten gekrümmten Fläche (2) und der unteren Fläche (4) umfasst.

4. Kolbenring (1) gemäß einem der Ansprüche 1 bis 3, wobei der Kolbenring (1) zweite und dritte nach außen gekrümmte Flächen (6) zwischen der ersten gekrümmten Fläche (2) und der oberen Fläche (3) und zwischen der ersten gekrümmten Fläche (2) und der unteren Fläche (4) umfasst.

5. Kolbenring (1) gemäß einem der Ansprüche 1 bis 4, wobei ein radialer zurückgehender Abstand t von dem Maximalpunkt der ersten gekrümmten Fläche (2) zum Ende der ersten gekrümmten Fläche (2) auf der obere Fläche (3)-Seite in dem Querschnitt 0,001-0,015 % vom Nenndurchmesser d1 des Kolbenrings (1) beträgt.

**Revendications**

1. Segment de piston (1), comprenant une surface de glissement périphérique externe comportant une première surface incurvée (2) qui est renflée vers l'extérieur dans une section transversale le long d'un axe central dudit segment de piston (1), ladite première surface incurvée (2) ayant un rayon de courbure (R) croissant de façon continue ou décroissant de façon continue en passant d'un côté de surface inférieure (4) à un côté de surface supérieure (3),
   **caractérisé en ce que** :
   une courbe de ladite première surface incurvée dans ladite section transversale est une courbe développante déformée exprimée par les formules :

$$x = a \left( \cos \theta + \theta^b \cdot \sin \theta \right) / \alpha,$$

et

$$y = a(\sin\theta - \theta\cos\theta)/\beta,$$

dans lesquelles a, b, $\alpha$ et $\beta$ sont des constantes.

2. Segment de piston (1) selon la revendication 1, dans lequel le pic de ladite première surface incurvée (2) dans ladite section transversale est positionné sur le côté de surface inférieure (4) par rapport au centre axial.

3. Segment de piston (1) selon la revendication 1 ou la revendication 2, dans lequel ledit segment de piston (1) comprend des chanfreins (6) entre ladite première surface incurvée (2) et ladite surface supérieure (3), et entre ladite première surface incurvée (2) et ladite surface inférieure (4).

4. Segment de piston (1) selon l'une quelconque des revendications 1 à 3, dans lequel ledit segment de piston (1) comprend des deuxième et troisième surfaces incurvées vers l'extérieur (6) entre ladite première surface incurvée (2) et ladite surface supérieure (3), et entre ladite première surface incurvée (2) et ladite surface inférieure (4).

5. Segment de piston (1) selon l'une quelconque des revendications 1 à 4, dans lequel une distance de retrait radiale t du pic de ladite première surface incurvée (2) à l'extrémité de ladite première surface incurvée (2) sur le côté de surface supérieure (3) dans ladite section transversale est comprise entre 0,001 et 0,015% du diamètre nominal d1 dudit segment de piston (1).

## Fig. 1

## Fig. 2

# Fig. 3

# Fig. 4

**REFERENCES CITED IN THE DESCRIPTION**

**Patent documents cited in the description**

- JP 57196238 A
- JP 2002039384 A
- JP 2009091927 A
- US 2013181411 A1